# EUROPEAN PATENT SPECIFICATION

(11) **EP 3 608 995 B1**
(45) Date of publication and mention of the grant of the patent: **20.10.2021**
(21) Application number: 19190879.7
(22) Date of filing: 08.08.2019
(51) Int. Cl.: H01M 50/20, H01M 50/502, H01M 10/6557, H01M 10/613

(54) **HORIZONTAL COMPOSITE ELECTRICITY SUPPLY ELEMENT GROUP**
GRUPPE AUS HORIZONTALEN VERBUNDSTROMVERSORGUNGSELEMENTEN
GROUPE D'ÉLÉMENTS D'ALIMENTATION ÉLECTRIQUE COMPOSITES HORIZONTAUX

(30) Priority: 08.08.2018 TW 107127704; 11.10.2018 TW 107135859
(43) Date of publication of application: 12.02.2020
(73) Proprietor: Prologium Technology Co., Ltd., Taoyuan City 320 (TW); Prologium Holding Inc., Grand Cayman KY1-1104 (KY)
(72) Inventor: Yang, Szu-Nan, 320 Taoyuan City (TW)
(74) Representative: Lang, Christian

(56) References cited:
- CN-A- 103 500 768
- CN-A- 104 979 477
- CN-A- 107 706 258
- US-A1- 2007 178 377
- US-A1- 2013 157 068

## Description

### FIELD OF THE DISCLOSURE

The present disclosure relates generally to an electricity supply element group, and particularly to a high-voltage, high-capacity, and three-dimensionalized horizontal composite electricity supply element group.

### BACKGROUND OF THE DISCLOSURE

In recent years, due to the exhaustion of petrochemical fuels and the prevalence of the consciousness of environmental protection, people are forced to rethink how to balance between living convenience and environmental protection for those objects using petrochemical fuels as the power source and exhausting massive greenhouse gases. Cars, as important transportation vehicles, become one of the primary objects to be inspected. Accordingly, under the global trend of energy saving and carbon reduction, many countries worldwide set car electrification as an important target for carbon dioxide reduction. Unfortunately, electric cars face many problems in practical applications. For example, the capacity of electricity supply elements, such as batteries, limits the endurance. Consequently, more batteries should be connected in series or parallelly for increasing the capacity and thus extending the mileage.

To reducing the car weight for extending mileage, the secondary batteries with high energy density and light weight, such as lithium-ion secondary batteries, become the best choice for the battery of electric cars. Nonetheless, how to assemble multiple lithium-ion secondary batteries to form a safe and stable power source has become an urgent challenge for people.

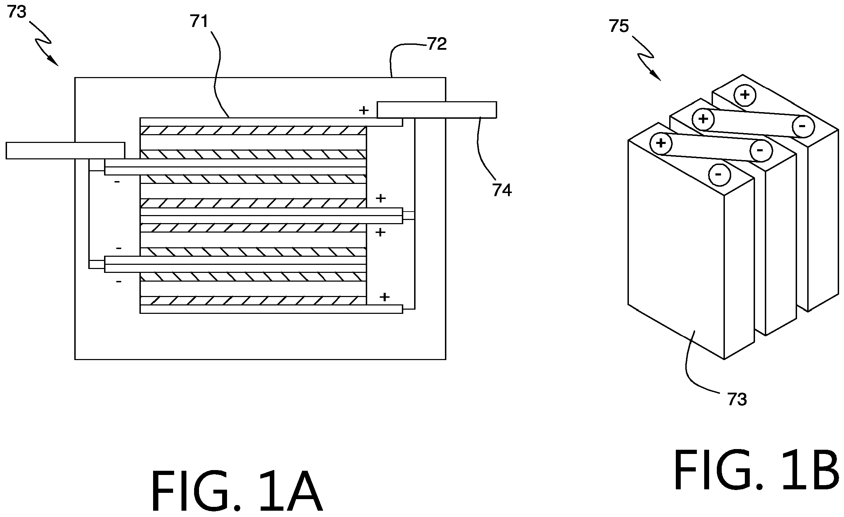

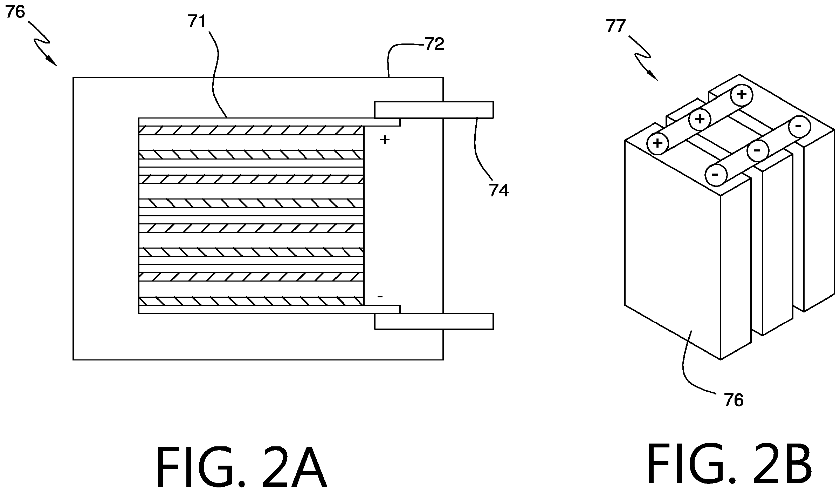

FIG. 1A and FIG. 1B show the common method. After multiple sets of battery elements 71 are connected parallelly, the housing 72 is used for sealing and forming the battery cell 73. Then the conductive leads 74 protruding from the housings 72 of the battery cells 73 are connected in series externally for reaching a sufficient voltage, giving the battery module 75 for cars. According to another method, a single housing 72 is adopted for covering multiple battery elements 71, as shown in FIG. 2A and FIG. 2B. In other words, internal series connection is adopted for increasing the voltage of the battery cell 76. Then multiple battery cells 76 are connected parallelly and externally for reaching sufficient capacity for forming the battery module 77 for cars. Unfortunately, current electrolyte can only sustain around 5 volts. Besides, it is difficult to form a closed system for electrolyte due to internal structural problems. Once the voltage exceeds the sustainable range of the electrolyte, the electrolyte will decompose and make the battery module 77 fail. Even worse, the battery might explode. Accordingly, there is no such product in the market.

According to the US patent application No. 2004/0091771, adjacent battery modules share a common electricity collecting layer. By using this method, the problem of electrolyte decomposition as described above can be solved. Unfortunately, owing to the series connection to the common electricity collecting layer, the design will be less flexible. Only internal series connection can be adopted. To form a battery module, external parallel connection of a plurality of battery cells still should be adopted.

Furthermore, according to a composite electricity supply element group of Taiwan patent application No. 106136071, serial and parallel connections of electricity supply element group can be done inside battery cells directly for giving high-voltage and high-unit-capacity battery cells, eliminating the drawbacks of lower performance and reduced capacity density due to external connection according to the prior art. Unfortunately, according to the technology, the electricity supply element achieves high capacity and high voltage by vertically stacking a great number of electricity supply elements for serial and/or parallel connections.

Nonetheless, while facing puncture of metal objects, the high voltage drop caused by puncture is unavoidable extremely dangerous for fully solid, pseudo solid (solid/liquid), or liquid electrolyte systems. It is particularly dangerous for electricity supply element group formed by vertically stacking massive electricity supply elements internally by series connections.

According to the drawbacks, the present disclosure provides a novel horizontal composite electricity supply element group for avoiding safety concerns caused by puncture of battery elements by metal objects.

Patent application publication CN 107706258 A discloses a battery assembly having the features of the preamble of claim 1. A battery design with vertically stacked electrodes and separators is known from patent application publication US 2013/157068 A1. CN 107 706 258 A discloses a group of connected in series battery units arranged horizontally next to each other and physically separated from however electrically connected to one another by combination of a conductive material and first and second insulating layers.

CN 103 500 768 A discloses a group of connected in series solar battery units arranged horizontally next to each other and physically separated from one another by two insulating elements and electrically in contact with the corresponding electrodes, through an electrically conducting element positioned between the two insulating elements.

CN 104 979 477 A discloses a series of solar unit cells arranged side by side in a horizontal direction, where each of the unit cells is sandwiched between an electrode base board and a photo-anode substrate, and where the electrode base board and the photo-anode substrate have patterned conductive layers adjacent to the top and the bottom surface of each of the cell units, respectively. The unit cells are electrically connected with each other through the patterned conductive layers and a conductor positioned between each of the cell units.

US 2013/157068 A1 discloses a plurality of unit cells arranged and electrically connected side by side in a horizontal direction and physically separated by electrically insulating and thermally conducting cell barriers.

### SUMMARY

An objective of the present disclosure is to provide a horizontal composite electricity supply element group, which adopts horizontal series and/or parallel connections to connect electrically multiple electricity supply element groups for reducing the number of vertically stacked electricity supply elements and avoiding safety problems caused by puncture of battery elements by metal objects.

Another objective of the present disclosure is to provide a horizontal composite electricity supply element group. A first insulation layer and a second insulation are disposed at the top and bottom, respectively. Multiple electricity supply element groups extending horizontally and connected serially and/or parallelly are disposed between the first and second insulation layers. By using the first and second insulation layers, the potential damages caused by punctures on the electricity supply elements by external metal objects can be prevented.

Another objective of the present disclosure is to provide a horizontal composite electricity supply element group. There is no electrochemical reaction between adjacent electricity supply elements except charge transfer. Thereby, electricity supply elements will not limit to the maximum voltage of allowance of electrolyte, and could connect in series and/or parallel way. Hence, the capacity density and voltage can be improved.

Still another objective of the present disclosure is to provide a horizontal composite electricity supply element group. Multiple channels are formed between adjacent electricity supply element groups, acting as paths for heat dissipation.

A further objective of the present disclosure is to provide a horizontal composite electricity supply element group. The electricity collecting layers between adjacent electricity supply elements contact directly. The contact area is much larger than the one by nickel plate soldering according to the prior art. Thereby, the internal resistance of the electricity supply element group can be reduced substantially. The performance of the power module formed by the electricity supply element groups hardly loses. In addition, because the reduction of resistance, the charging and discharging speed increase significantly, and the heating problem is reduced significantly. Then the cooling system of the power module can be simplified, and the management and control will be easier. Thereby, the reliability and safety of the overall composite electricity supply element group can be enhanced.

To achieve the above objectives, the present disclosure provides a horizontal composite electricity supply element group having the features of claim 1. Further embodiments are subject-matter of the dependent claims.

The horizontal composite electricity supply element group according to the invention comprises a first insulation layer, a second insulation layer, a first patterned conductive layer, a second patterned conductive layer, and a plurality of electricity supply element groups. The second insulation layer is disposed opposing to the first insulation layer. The first patterned conductive layer is disposed on a first surface of the first insulation layer. The second patterned conductive layer is disposed on a second surface of the second insulation layer. The first patterned conductive layer is opposing to the second patterned conductive layer. The plurality of electricity supply element groups are disposed between the first insulation layer and the second insulation layer, and connected serially and/or parallelly via the first patterned conductive layer and the second patterned conductive layer. The plurality of electricity supply element groups are arranged side by side along said first insulation layer and said second insulation layer and sandwiched between said first insulation layer and said second insulation layer.

Each electricity supply element comprises an isolation layer, two active material layers, two electricity collecting layers, an electrolyte system, and a package layer. The two active material layers are disposed on both sides of the isolation layer, respectively. The two electricity collecting layers are disposed on the outer sides of the active material layers, respectively. The electrolyte system is disposed in the active material layers. The package layer is disposed on the periphery of the two electricity collecting layers for gluing the electricity collecting layers and encapsulating the electrolyte system between the two electricity collecting layers. In other words, each electricity supply element is an independent module. The electrolyte system does not circulate to one another. There is no electrochemical reaction between adjacent electricity supply elements except charge transfer. Thereby, electricity supply elements will not be limited to the maximum voltage of allowance of electrolyte, and could connect in series and/or parallel at same time.

In the following, concrete embodiment are described in detail for understanding the objective, technologies, feature, and the effects provided by the present disclosure.

### BRIEF DESCRIPTION OF THE DRAWINGS

FIG. 1A and 1B show schematic diagrams of the battery cell and battery module according the first embodiment according to the prior art;
FIG. 2A and 2B show schematic diagrams of the battery cell and battery module according the second embodiment according to the prior art;
FIG. 3 shows a schematic diagram of the horizontal composite electricity supply element group according to the first embodiment of the present disclosure;
FIG. 4A shows a structural schematic diagram of the electricity supply element according to the present disclosure;
FIG. 4B shows another structural schematic diagram of the electricity supply element according to the present disclosure;
FIG. 5A shows a schematic diagram of the embodiment of FIG. 3 in which the electricity supply element group of the horizontal composite electricity supply element group is formed by serially connecting multiple electricity supply elements;
FIG. 5B shows a partially enlarged diagram of the region A in FIG. 5A;
FIG. 6 shows a schematic diagram of internally and parallelly connecting electricity supply element groups of the horizontal composite electricity supply element group according to an embodiment of the present disclosure;
FIG. 7 shows a schematic diagram of the horizontal composite electricity supply element group according to another embodiment of the present disclosure;
FIG. 8A shows a schematic diagram of externally and serially connecting multiple horizontal composite electricity supply element groups according to an embodiment of the present disclosure;
FIG. 8B shows a schematic diagram of externally and parallelly connecting multiple horizontal composite electricity supply element groups according to an embodiment of the present disclosure;
FIG. 9 shows a schematic diagram of the horizontal composite electricity supply element group according to another embodiment of the present disclosure;
FIG. 10 shows a schematic diagram of the horizontal composite electricity supply element group according to another embodiment of the present disclosure;
FIG. 11 shows a schematic diagram of the horizontal composite electricity supply element group according to another embodiment of the present disclosure;
FIG. 12 to FIG. 14 show serial and/or parallel electrical connection diagrams of multiple electricity supply elements in an electricity supply element group according to the present disclosure; and
FIG. 15 shows a schematic diagram of a tab formed on the electricity collecting layer of the electrochemical system element according to the present disclosure.

### DETAILED DESCRIPTION

Given the safety problem caused by puncture on multiple electricity supply element stacked vertically and connected serially/parallelly by metal sharp objects for the demand of high voltage and high capacity, the present disclosure provides a novel horizontal composite electricity supply element group to solve the puncture problem. The above composite electricity supply unit can be any supply element capable of storing energy and supply external devices, such as batteries or capacitors.

The present disclosure mainly discloses a horizontal composite electricity supply element group, which comprises a plurality of electricity supply element groups. The electricity supply element group comprises one or more vertically serial and or parallel connected electricity supply elements. Then, after the electricity supply element groups are connected serially or parallelly in the horizontal direction via the first and second patterned conductive layers, a first terminal and a second terminal are connected to electricity supply element groups to form the composite electricity supply element group. In other words, inside the composite electricity supply element group, series and parallel connections can be done concurrently. The electricity supply elements forming the electricity supply element group according to the present disclosure are independent and complete electricity supply modules. They don't share electrolyte systems. Figures are used for further description. For convenience, a lithium battery is adopted in the following embodiment for description. A person having ordinary skill in the art knows well that the embodiment is not used to limit the scope of the present disclosure.

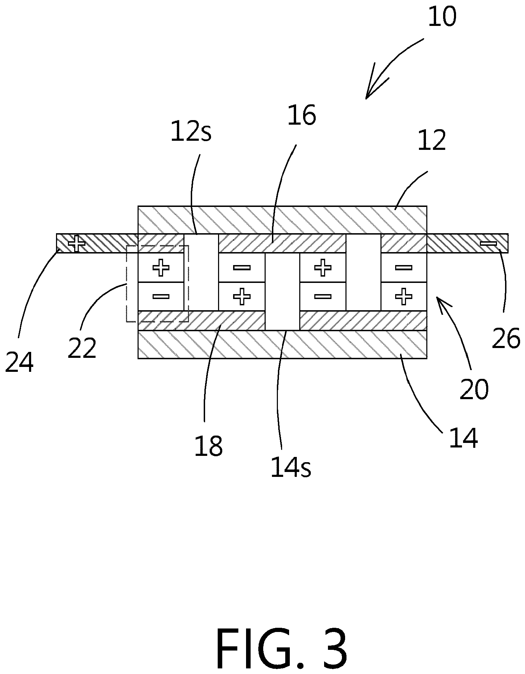

Fig. 3 shows a schematic diagram of the horizontal composite electricity supply element group according to the first embodiment of the present disclosure. As shown in the figure, the horizontal composite electricity supply element group 10 according to the present disclosure mainly comprises a first insulation layer 12, a second insulation layer 14, a first patterned conductive layer 16 (16a, 16b 16c), a second patterned conductive layer 18 (18a, 18b), and a plurality of electricity supply element groups 20. The second insulation layer 14 is opposing to the first insulation layer 12 and both layers extend horizontally. The first patterned conductive layer 16 is located on a first surface 12s extending horizontally inside the first insulation layer 12. The second patterned conductive layer 18 is located on a second surface 14s extending horizontally inside the second insulation layer 14. The first patterned conductive layer 16 is opposing to the second patterned conductive layer 18. The material of the first and second patterned conductive layers 16, 18 can be selected from the group consisting of metals and any conductive materials. The plurality of electricity supply element groups 20 are arranged side by side and sandwiched between the first and second insulation layers 12, 14 and connected electrically to the different polarity via the first and second patterned conductive layers 16, 18 for forming series connection. The words "side by side" mean that the plurality of electricity supply element groups 20 are not stacked vertically along a single Z axis. Instead, they are disposed in the horizontal direction.

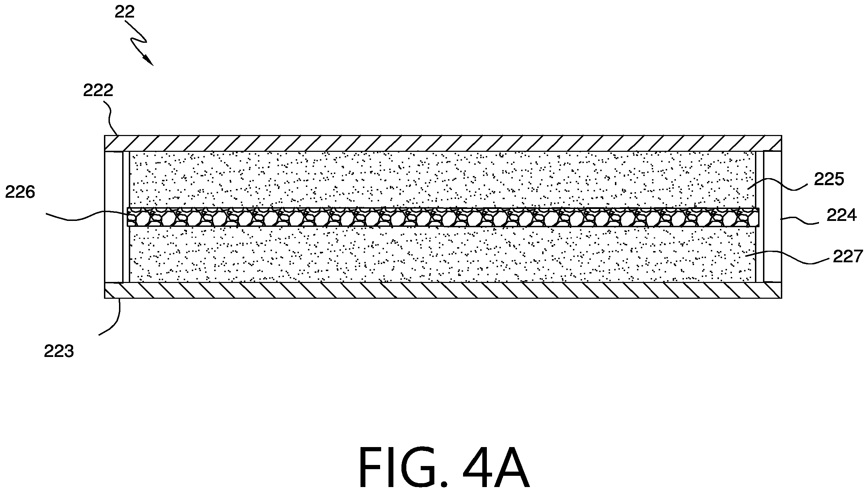

The electricity supply element group 20 as described above is formed by one or more electricity supply elements 22. For example, in FIG. 3, the horizontal composite electricity supply element group 10 is formed by serially connecting four electricity supply element groups 20. Any of the electricity supply element groups 20 is formed by an electricity supply element 22. The structure of the above electricity supply element 22 is shown in FIG. 4A. Any of the battery cell 22 includes a first electricity collecting layer 222, a second electricity collecting layer 223, a package layer 224, a first active material layer 225, an isolation layer 226, and a second active material layer 227. The package layer 224 is sandwiched between the first and second electricity collecting layers 222, 223. The first electricity collecting layer 222, the second electricity collecting layer 223, and the package layer 224 form a sealed space isolating from external moisture and oxygen. The first active material layer 225, the isolation layer 226, and the second active material layer 227 are deposited sequentially in the sealed space. The electrolyte system is disposed in the first active material layer 225 and the second active material layer 227. The first active material layer 225 is connected to the first electricity collecting layer 222, and the second active material layer 227 is connected to the second electricity collecting layer 223.

The material of the isolation layer 226 with micro holes allowing ions to passing through can be selected from the group consisting of polymer materials, ceramic materials, and glass fiber materials. The micro holes can be penetrating holes, nonlinear holes, or even made by porous materials. In addition, porous ceramic insulative materials can be distributed inside the micro hole of the substrate. The ceramic insulative materials can be formed by materials such as micrometer- or nanometergrade titanium dioxide (TiO₂), aluminum oxide (Al₂O₃), silicon dioxide (SiO₂), or alkylated ceramic particles. The ceramic insulative material can further include polymer adhesives, such as polyvinylidene fluoride (PVDF), polyvinylidene fluoride-co-hexafluoropropylene (PVDF-HFP), polytetrafluoroethylene (PTFE), acrylic acid glue, epoxy, polyethylene oxide (PEO), polyacrylonitrile (PAN), or polyimide (PI).

The electrolyte system is disposed in the first and second active material layers 225, 227. The form of the electrolyte system can be selected from the group consisting of liquid state, pseudo solid state, gel state, solid state or combinations thereof. The active materials of the active material layers 225, 227 can convert chemical energy to electrical energy for usage (supplying electricity) or electrical energy to chemical energy for storage (charging), and can achieve ion conduction and transport concurrently. The generated electrons can be led outward via the first and second electricity collecting layers 222, 223. The common materials for the first and second electricity collecting layers 222, 223 include copper and aluminum. Alternatively, they can include other metals such as nickel, tin, silver and gold, metal alloys or stainless steel.

The material of the package layer 224 can include epoxy, polyethylene, polypropylene, polyurethane, thermoplastic polyimide, silicone, acrylic resin, or ultraviolet-hardened glue. The material is disposed on the periphery of the two electricity collecting layers 222, 223 for gluing them and sealing the electrolyte system therebetween for avoiding leakage and circulation with the electrolyte system of other electricity supply elements 22. Thereby, the electricity supply element 22 is an independent and complete electricity supply module.

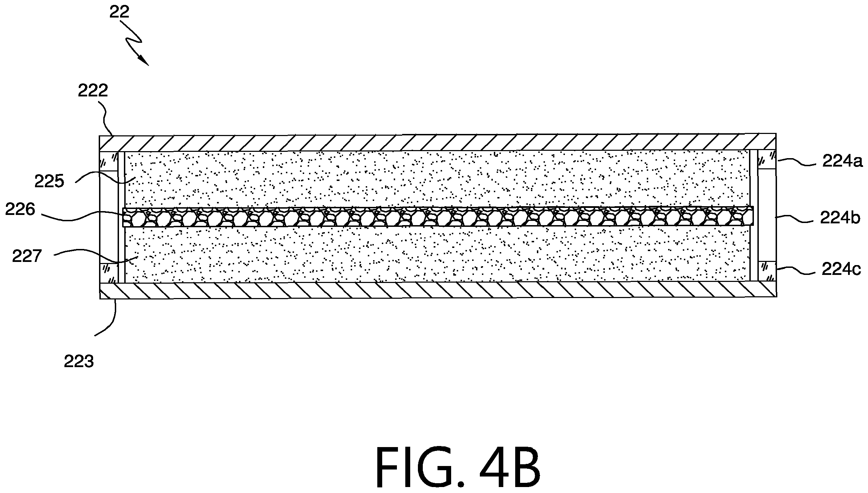

To improve the sealing effect of the package layer 224, the package layer 224 can be designed to have three layers. Please refer to FIG. 4B. The top and bottom layers 224a, 224b are modified silicone and the middle layer is a silicone layer 224c. The modified silicone layers 224a, 224b on both sides are modified by adjusting the ratio of addition and condensation silicone for gluing heterogeneous materials. By using the design, the cohesion at the interface is increased. At the same time, the overall appearance is more complete, and the production yield is improved. Furthermore, the design can block permeation of moisture. Internally, the silicone layer 224c acting as the main structure can block damages caused by polar solvent and plastic agent. Thereby, the overall sealing structure can be more complete.

In addition, for easier description and identification, the electricity supply elements 22 in the figures for illustrating the horizontal composite electricity supply element group use simple positive and negative symbols to identify the positive and negative electrical polarities, instead of plotting the detailed components of the electricity supply element 22 as shown in FIG. 4A and FIG. 4B. A person having ordinary skill in the art should know the meanings of the positive and negative polarities. Hence, the details will not be described again.

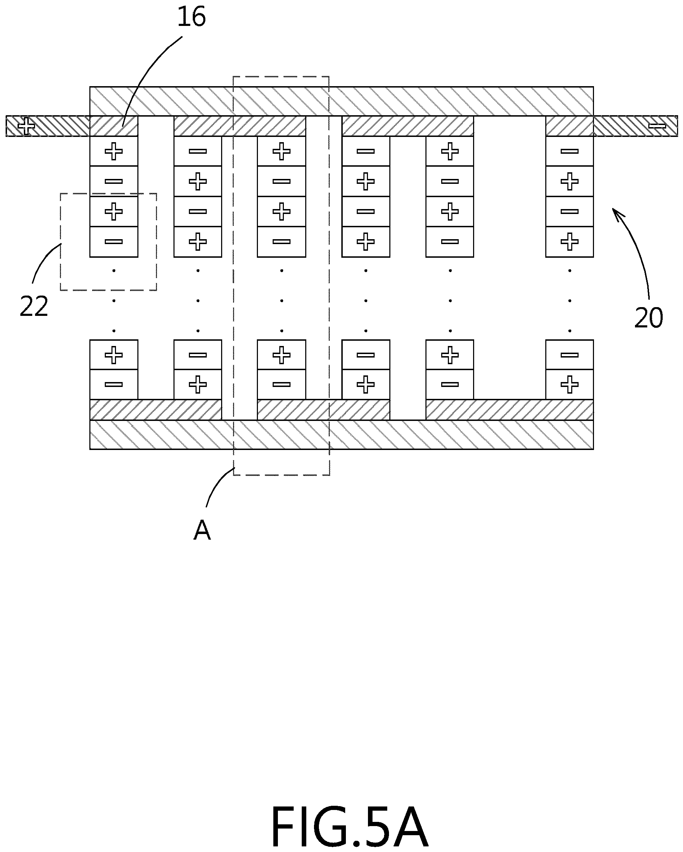

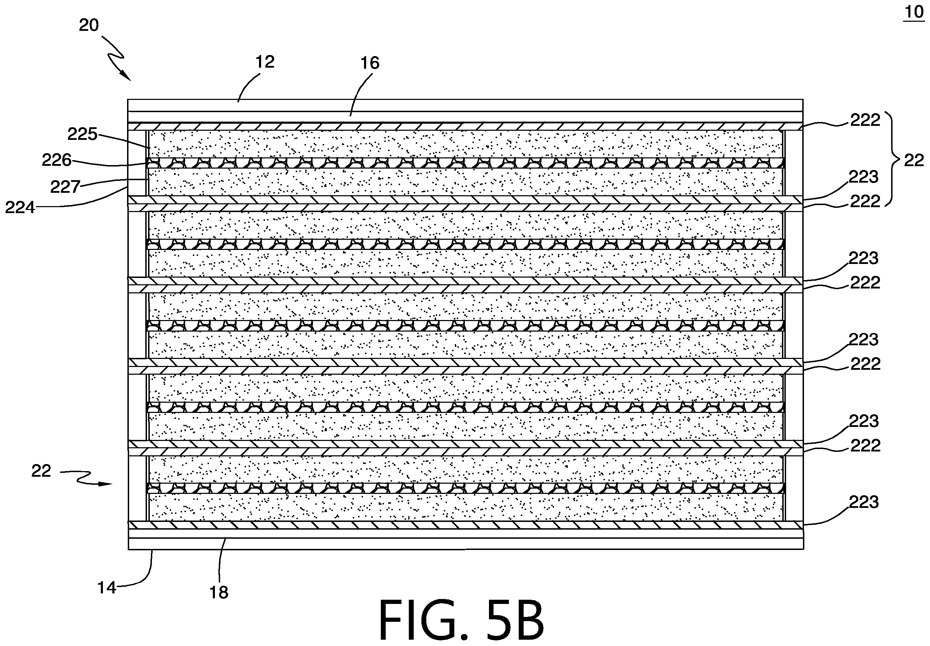

As shown in FIG. 5A and FIG.5B, the electricity supply element group 20 is formed by serially connecting a plurality of electricity supply elements 22. The outermost sides of the electricity supply element 22 are the first and second electricity collecting layers 222, 223. Hence, the first and second electricity collecting layers 222, 223 of adjacent electricity supply elements 22 can be mutually connected by directly contacting to form series electrical connection. For example, as shown in the figures, the first electricity collecting layer 222 is positive, and the second electricity collecting layer 223 is negative. The second electricity collecting layer 223 of the electricity supply element 22 at the top can contact the first electricity collecting layer 222 of the adjacent (bottom) electricity supply element 22. The second electricity collecting layer 223 of the negative terminal of the latter electricity supply element 22 can contact the first electricity collecting layer 222 of the positive terminal of the adjacent electricity supply element 22. By stacking sequentially, the electricity supply element group 20 in series connection can be formed. Because each electricity supply element 22 is an independent electricity supply module, their electrolyte systems do not circulate. Thereby, there is no electrochemical reactions between the first and second electricity collecting layers 222, 223 of adjacent electricity supply elements 22 except charge transfer(that is to say, ions will not transfer or conduct). Therefore, even multiple electricity supply elements 22 are connected serially to form a high voltage, the electrolyte system of individual electricity supply element 22 will not be influenced. The internal voltage is still maintained at the voltage of a single electricity supply element 22. Thereby, it will not limit to the maximum voltage (generally, around 5 volts) of the electrolyte system, the electricity supply element group 20 with high voltage could be formed by serial stacking multiple electricity supply elements 22.

The top surface electrode (the first electricity collecting layer 222) of the topmost electricity supply element 22 in the electricity supply element group 20 contacts directly the first patterned conductive layer 16 to form electrical connection. The bottom surface electrode (the second electricity collecting layer 223) of the bottommost electricity supply element 22 in the electricity supply element group 20 contact the second patterned conductive layer 18 to form electrical connection. The method of direct contact as described above can be physical contact or chemical contact. More specifically, direct contact can be formed by soldering with or without soldering material or by melting method. Alternatively, conductive silver glue or conductive cloth can be adopted.

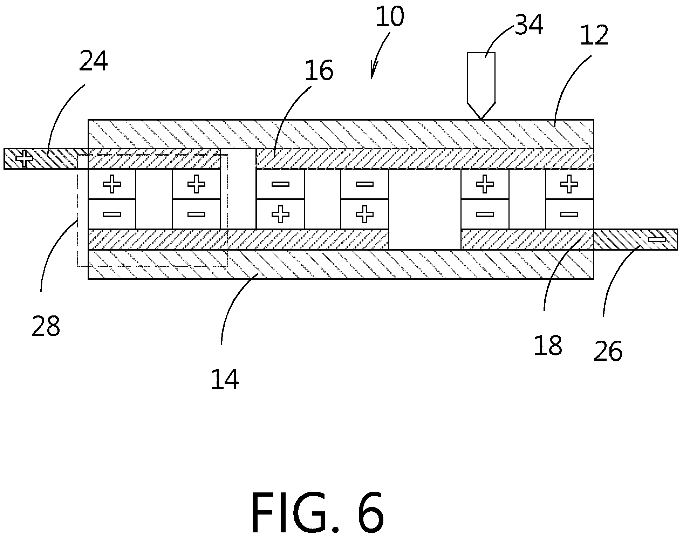

The horizontal composite electricity supply element group 10 according to the present disclosure further comprises a first conductive lead 24 and a second conductive lead 26. In FIG. 3, the first conductive lead 24 and the second conductive lead 26 are connected electrically to the first patterned conductive layer 16 concurrently, or alternatively, to the second patterned conductive layer 18 concurrently. Of course, they can be connected to different metal layers. For example, the first conductive lead 24 is connected electrically to the first patterned conductive layer 16 while the second conductive lead 26 is connected electrically to the second patterned conductive layer 18, as illustrated in FIG. 6.

Furthermore, the first conductive lead 24 and the second conductive lead 26 can be formed integrally with the first patterned conductive layer 16 or the second patterned conductive layer 26 connected electrically with them. In other words, during the process of patterning, the patterns of the first conductive lead 24 and the second conductive lead 26 are reserved. When the first and second conductive leads 24, 26 are formed not adopting the integral method, the materials of the first and second conductive leads 24, 26 can be different from those of the first and/or second patterned conductive layers 16, 18. In addition, direct contact can be formed by soldering with or without soldering material, or by melting method. Alternatively, conductive silver glue or conductive cloth can be adopted.

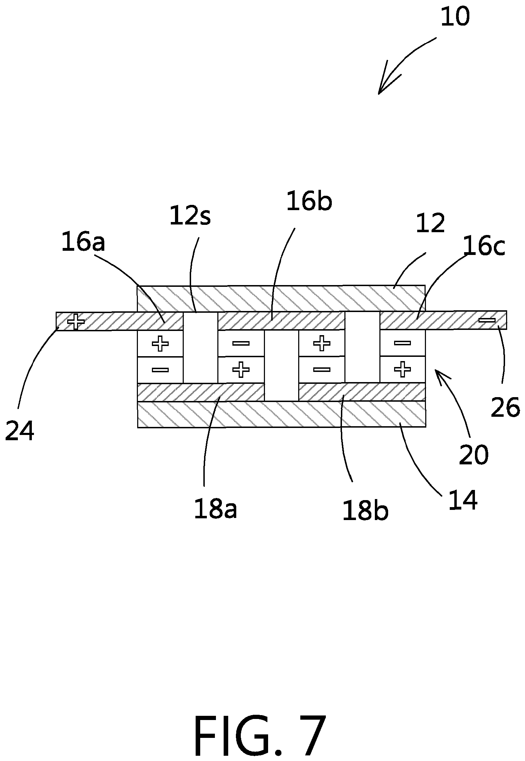

Referring to Fig. 7, a portion of the first patterned conductive layer 16a is extended to the outside of the first insulation layer 12 and acting as the first conductive lead 24; a portion of the first patterned conductive layer 16c is extended to the outside of the first insulation layer 12 and acting as the second conductive lead 26. And, in the figure, multiple electricity supply element groups 22 (in the figure, an electricity supply element group is formed by a single electricity supply element 22), are all connected in opposite polarity via the first and second patterned conductive layers 16, 18, making the multiple electricity supply element groups 22 serially connected.

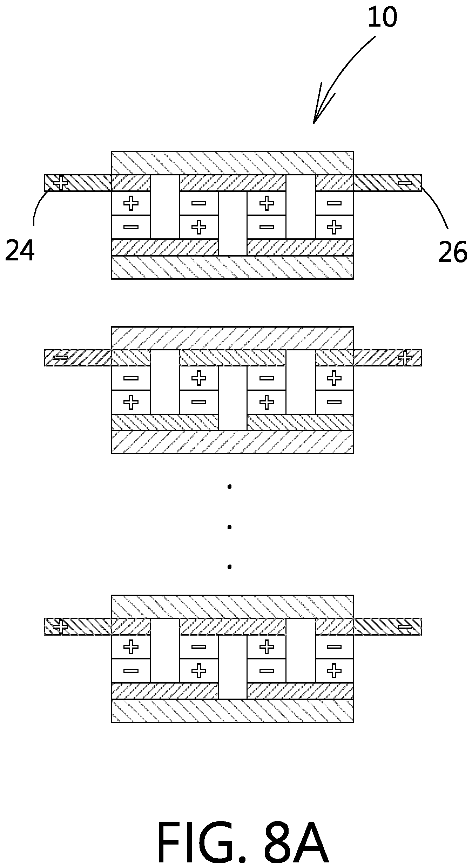

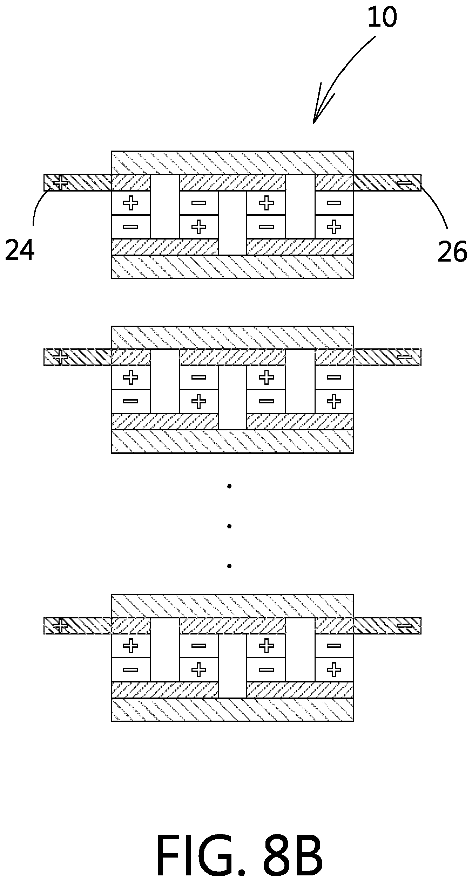

Under the architecture of the horizontal composite electricity supply element group according to the present disclosure, to increase the total capacity or total voltage of the battery module, the only thing to do is to perform external series/parallel connection of multiple horizontal composite electricity supply element groups 10 by using the first and second conductive leads 24, 26. Then the total capacity or the total voltage of the battery module can be increased. For example, by externally connecting serially multiple horizontal composite electricity supply element groups 10, the total voltage can be increased, as shown in FIG. 8A. By externally connecting parallelly multiple horizontal composite electricity supply element groups 10, the total capacity can be increased, as shown in FIG. 8B.

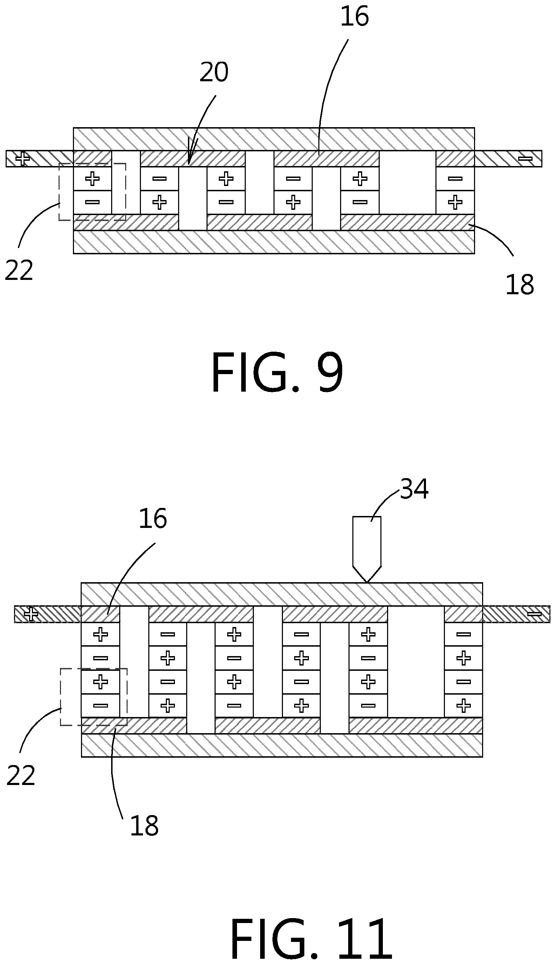

To increase the voltage of a single horizontal composite electricity supply element group, simply add the electricity supply element group. For example, as shown in FIG. 9, compared to FIG. 3, two electricity supply element groups 20 are added and connected serially via the first and second patterned conductive layers 16, 18.

Referring to Fig. 6, the horizontal composite electricity supply element group 10 uses two electricity supply element groups 20 to form a new set 28 by parallelly connecting the same polarity via the first and second patterned conductive layers 16, 18. Then the new set 28 is used as an element. By connecting the opposite polarities via the first and second patterned conductive layer 16, 18, a series connection is formed. In addition, the electricity supply element group 20 shown in FIG. 6 can be formed by connecting serially multiple electricity supply elements for supplying a larger voltage. Besides, although the new set 28 can be integrated into an electricity supply element, the number of gaps 30 can be increased if they are separated.

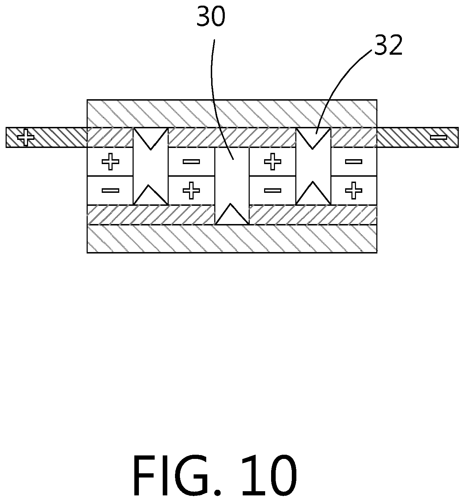

Referring to Fig. 10, the gaps between connected electricity supply element groups 20 can act as the heat dissipation channels for the horizontal composite electricity supply element group 10. Multiple positioning members 32 are formed on the surfaces of the first insulation layer 12 and/or the second insulation layer 14 facing the electricity supply element groups 20. The positioning members 32 are exposed outside the first or second patterned conductive layers 16, 18 for limiting the locations of the electricity supply element groups 20. For example, because the electricity supply element 22 include the electricity collecting layer, the existence of the positioning member 32 can assist to fix the electricity supply element group 20 formed by one or more electricity supply element 22 to the correct location. Furthermore, a fluid, such as gas or liquid, can be added into the gaps for increasing the heat dissipation effect.

The benefits of the present disclosure will be further described. For example, according to the composite electricity supply element group of the Taiwan patent application No. 106136071, 24 electricity supply elements are vertically and serially connected to give a voltage value of 24*4.2 volts. By adopting the horizontal composite electricity supply element group according to the present disclosure given the same voltage value and number of electricity supply elements, 24 single electricity supply elements can be connected in opposite polarities in horizontal direction via the first and second patterned conductive layers 16, 18, as the horizontal extension state shown in FIG. 9. Alternatively, 12 pairs of serially stacked electricity supply elements can be connected in opposite polarities in horizontal direction via the first and second patterned conductive layers 16, 18, as shown in FIG. 11. Alternatively, another number of stacked electricity supply elements can be adopted. Under this architecture, when a sharp metal object 34 punctures the horizontal composite electricity supply element group from the outside, instead of the 24 vertically stacked electricity supply elements the punctured object will be only a few stacks. Thereby, the danger of puncture on a massive serially stacked electricity supply elements can be avoided effectively.

Moreover, in addition to blocking puncture effectively, the first and second insulation layers 12, 14 according to the present disclosure can act as the blocking layers for electrical contact between the first and second patterned conductive layers when multiple battery cells 10 are externally connected serially and/or parallelly.

Next, when the electricity supply element group 20 is formed by two or more electricity supply elements 22, the serial and/or parallel configurations of the plurality of electricity supply elements 22 are described.

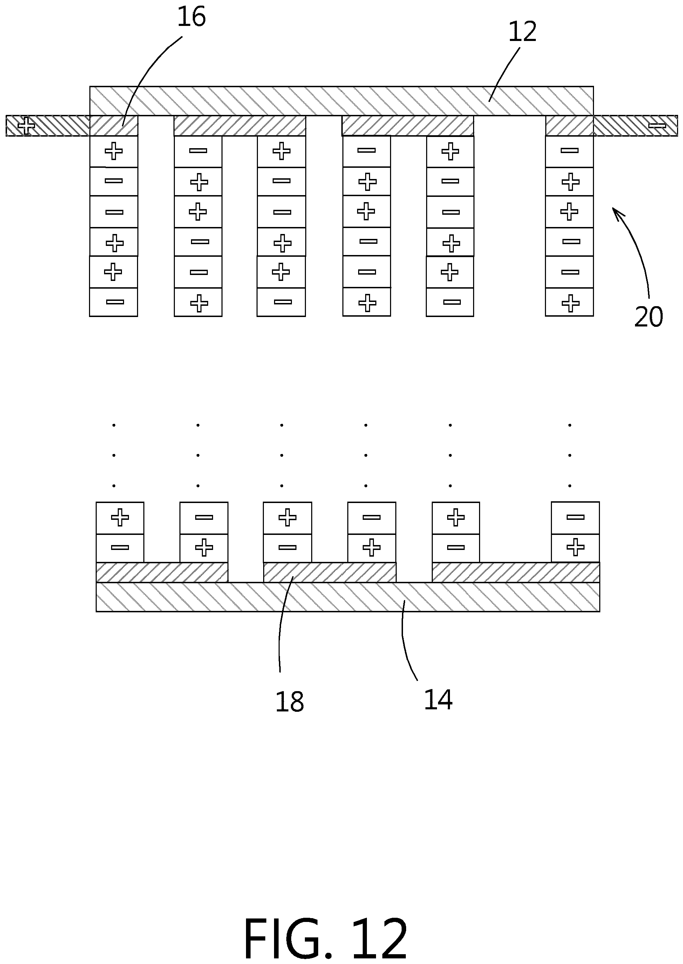

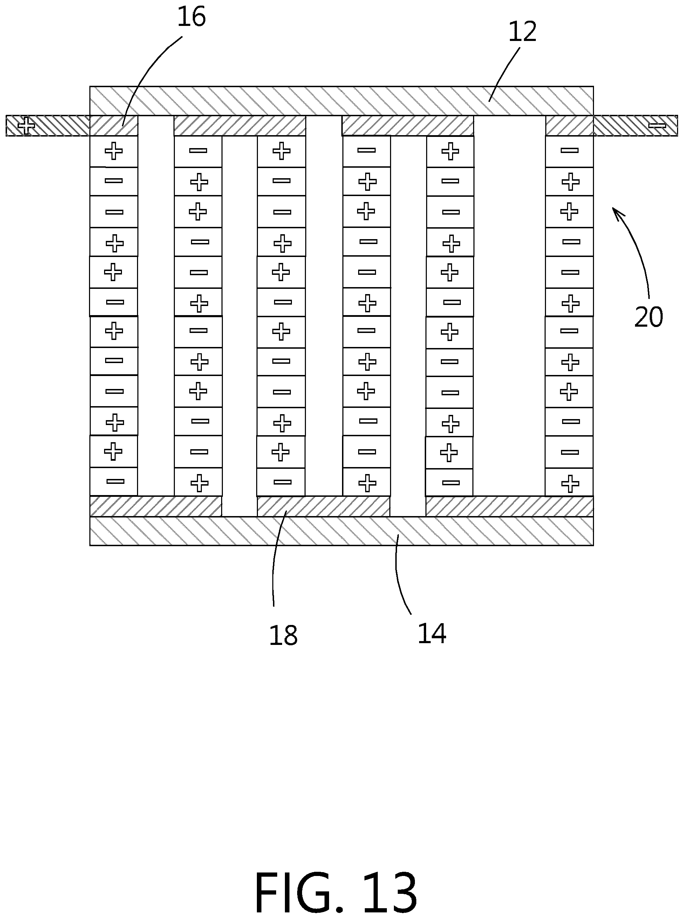

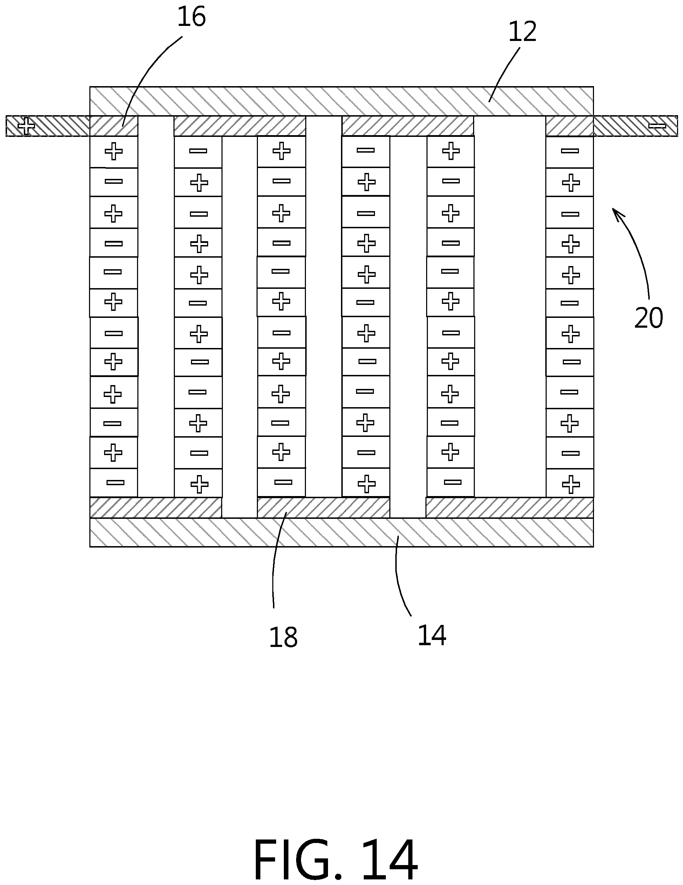

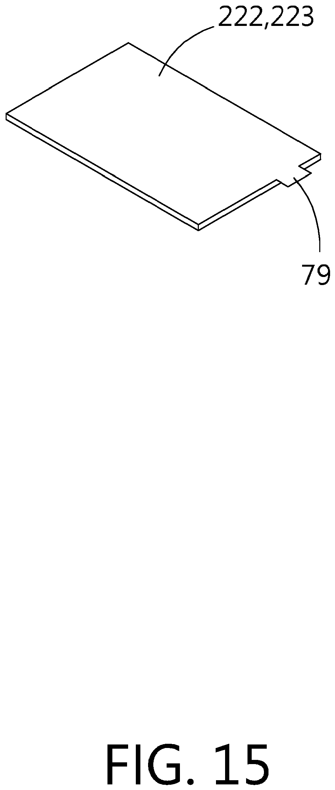

Referring to Fig. 5, the multiple electricity supply elements 22 in the electricity supply element group 20 are connected electrically in series and opposite polarities. As depicted in Fig. 12, the multiple electricity supply elements 22 in the electricity supply element group 20 are connected electrically in parallel and the same polarity. As shown in Fig. 13, the multiple electricity supply elements 22 in the electricity supply element group 20 are connected in a mixed method by first parallel and then series connections. As shown in Fig. 14, the multiple electricity supply elements 22 in the electricity supply element group 20 are connected in a mixed method by first series and then parallel connections. In the mixed connection method as described above, the positive/negative terminals (the electricity collecting layers) of the electricity supply element 22 are connected to the corresponding patterned conductive layers through suitable wires. In addition, for convenient connection of wires and the electricity collecting layers of the electricity supply elements 22, a tab 79 can be disposed at the electricity collecting layers, as shown in FIG. 15.

To sum up, the present disclosure provides a horizontal composite electricity supply element group, which comprises multiple electricity supply element group arranged side by side. The electricity supply element group are serially and/or parallelly connected internally in a horizontal extension method via the first and second patterned conductive layer for reaching a certain voltage and capacity. In addition, external series and/or parallel connections of multiple horizontal composite electricity supply element groups can be done via the first and second conductive leads of the horizontal composite electricity supply element groups. Furthermore, the horizontal composite electricity supply element group according to the present disclosure comprises a first and second insulation layer at the top and bottom acting as the blocking layer for electrical contact of the first and second patterned conductive layers between battery cells as well as effectively preventing potential damages caused by puncture of metal objects.

## Claims

1. A horizontal composite electricity supply element group (10), comprising:
a first insulation layer (12);
a second insulation layer (14), disposed opposing along the horizontal direction to said first insulation layer (12);
**characterized by**
a first patterned conductive layer (16, 16a, 16b, 16c), disposed on a first surface of said first insulation layer (12);
a second patterned conductive layer (18, 18a, 18b), disposed on a second surface of said second insulation layer (14), and opposing along the horizontal direction to said first patterned conductive layer (16, 16a, 16b, 16c), a first conductive lead (24) and a second conductive lead (26) are connected electrically to said first patterned conductive layer (16, 16a, 16b, 16c) or second patterned conductive layer (18, 18a, 18b), or to said first patterned conductive layer (16, 16a, 16b, 16c) and said second patterned conductive layer (18, 18a, 18b), respectively; and
a plurality of electricity supply element groups (20), arranged side by side and sandwiched between said first insulation layer (12) and said second insulation layer (14), connected electrically via said first patterned conductive layer (16, 16a, 16b, 16c) and said second patterned conductive layer (18, 18a, 18b) in horizontal direction, and forming series and/or parallel connections internally;
wherein each electricity supply element group (20) is formed by two or more vertically stacked electricity supply elements (22); each said electricity supply element (22) is an independent and complete module; the electrolyte systems of said electricity supply elements (22) do not circulate from one electricity supply element (22) to another and no chemical reaction occurs between adjacent electricity supply elements (22) except for charge transferring, each electricity supply element (22) comprises a first electricity collecting layer (222) and a second electricity collecting layer (223), said first electricity collecting layer (222) or said second electricity collecting layer (223) of each of said electricity supply element (22) in said electricity supply element group (20) directly contact said second electricity collecting layer (223) or said first electricity collecting layer (222) of an adjacent electricity supply element (22) to form electrical connection.

2. The horizontal composite electricity supply element group (10) of claim 1, wherein said electricity supply element (22) comprises:
a package layer (224), disposed between said first electricity collecting layer (222) and said second electricity collecting layer (223) for forming a sealed space;
a first active material layer (225), disposed in said sealed space and connected electrically to said first electricity collecting layer (222);
a second active material layer (227), disposed in said sealed space and connected electrically to said second electricity collecting layer (223);
an isolation layer (226), disposed in said sealed space, and sandwiched between said first active material layer (225) and said second active material layer (227); and
said electrolyte system, disposed in said first active material layer (225) and said second active material layer (227).

3. The horizontal composite electricity supply element group (10) of claim 2, wherein said first electricity collecting layers (222) or said second electricity collecting layers (223) of the said two electricity supply elements (22) on the outermost sides of said electricity supply element group (20) contact directly said first patterned conductive layer (16, 16a, 16b, 16c) or said second patterned conductive layer (18, 18a, 18b) to form electrical connections.

4. The horizontal composite electricity supply element group (10) of claim 1, wherein said first conductive lead (24) and said second conductive lead (26) are formed integrally with said first patterned conductive layer (16, 16a, 16b, 16c) or said second patterned conductive layer (18, 18a, 18b) connected electrically with them, or with said first patterned conductive layer (16, 16a, 16b, 16c) and second patterned conductive layer (18, 18a, 18b) connected electrically with them, respectively.

5. The horizontal composite electricity supply element group (10) of claim 1, wherein when a plurality of said horizontal composite electricity supply element groups (10) are formed, said plurality of horizontal composite electricity supply element groups (10) are externally connected serially and/or parallelly by using said first conductive lead (24) and said second conductive lead (26).

6. The horizontal composite electricity supply element group (10) of claim 1, further comprising a plurality of heat dissipation channels disposed between adjacent electricity supply element groups (20).

7. The horizontal composite electricity supply element group (10) of claim 1, wherein a plurality of positioning members (32) are formed on the surfaces of said first insulation layer (12) and/or said second insulation layer (14) facing said electricity supply element group (20), and said plurality of positioning members (32) are exposed outside said first patterned conductive layer (16, 16a, 16b, 16c) or said second patterned conductive layer (18, 18a, 18b) to limit the location of said electricity supply element group (20).

8. The horizontal composite electricity supply element group (10) of claim 1, wherein said electrolyte system is selected from the group consisting of gel state, liquid state, pseudo solid state, solid state or combinations thereof.

9. The horizontal composite electricity supply element group (10) of claim 1, wherein said plurality of electricity supply elements (22) are formed series connection via said first electricity collecting layer (222) and said second electricity collecting layer (223) with different polarities mutually contacting .

10. The horizontal composite electricity supply element group (10) of claim 2, wherein said package layer (224) of said electricity supply element (22) includes a silicone layer (224c) and two modified silicone layers (224a, 224b) on both sides of said silicone layer.

11. The horizontal composite electricity supply element group (10) of claim 6, wherein a fluid is added into said heat dissipation channels.

12. The horizontal composite electricity supply element group (10) of claim 12, wherein said fluid is gas or liquid.

13. The horizontal composite electricity supply element group (10) of claim 1, wherein said first conductive lead (24) and said second conductive lead (26) are connected to said first patterned conductive layer (16, 16a, 16b, 16c) or second patterned conductive layer (18, 18a, 18b) by physical or chemical connection, or to said first patterned conductive layer (16, 16a, 16b, 16c) and said second patterned conductive layer (18, 18a, 18b), respectively, by said physical or chemical connection.

14. The horizontal composite electricity supply element group (10) of claim 1, wherein said first conductive lead (24) and said second conductive lead (26) are connected to said first patterned conductive layer (16, 16a, 16b, 16c) or said second patterned conductive layer (18, 18a, 18b) by soldering, melting, conductive glue, or conductive cloth, or to said first patterned conductive layer (16, 16a, 16b, 16c) and second patterned conductive layer (18, 18a, 18b), respectively, by soldering, melting, conductive glue, or conductive cloth.

15. The horizontal composite electricity supply element group (10) of claim 3, wherein said first electricity collecting layers (222) or said second electricity collecting layers (223) of the said two electricity supply elements (22) on the outermost sides of said electricity supply element group (20) are connected to said first patterned conductive layer (16, 16a, 16b, 16c) or said second patterned conductive layer (18, 18a, 18b) by soldering, melting, conductive glue, or conductive cloth.

16. The horizontal composite electricity supply element group (10) of claim 2, wherein when said electricity supply element group (20) is formed by a plurality of electricity supply elements (22), said plurality of electricity supply elements (22) in any said electricity supply element group (20) are electrically connected parallelly and/or serially.

## Patentansprüche

1. Horizontale Stromversorgungsverbundelementgruppe (10), umfassend:
eine erste Isolationsschicht (12),
eine zweite Isolationsschicht (14), die entlang der horizontalen Richtung der ersten Isolationsschicht (12) gegenüberliegend angeordnet ist,
**gekennzeichnet durch**
eine erste strukturierte Leitschicht (16, 16a, 16b, 16c), die an einer ersten Oberfläche der ersten Isolationsschicht (12) angeordnet ist,
eine zweite strukturierte Leitschicht (18, 18a, 18b), die an einer zweiten Oberfläche der zweiten Isolationsschicht (14) angeordnet ist und gegenüber entlang der horizontalen Richtung der ersten strukturierten Leitschicht (16, 16a, 16b, 16c) liegt, wobei eine erste leitfähige Leitung (24) und eine zweite leitfähige Leitung (26) elektrisch mit der ersten strukturierten Leitschicht (16, 16a, 16b, 16c) oder der zweiten strukturierten Leitschicht (18, 18a, 18b) oder eine mit der ersten strukturierten Leitschicht (16, 16a, 16b, 16c) und die andere mit der zweiten strukturierten Leitschicht (18, 18a, 18b) verbunden sind, und
eine Vielzahl von Stromversorgungselementgruppen (20), die nebeneinander angeordnet sind und zwischen der ersten Isolationsschicht (12) und der zweiten Isolationsschicht (14) eingeschlossen sind und die elektrisch über die erste strukturierte Leitschicht (16, 16a, 16b, 16c) und die zweite strukturierte Leitschicht (18, 18a, 18b) in horizontaler Richtung verbunden sind und intern Reihen - und / oder Parallelverbindungen bilden,
wobei jede Stromversorgungselementgruppe (20) durch zwei oder mehr vertikal gestapelte Stromversorgungselemente (22) gebildet wird, wobei jedes Stromversorgungselement (22) ein unabhängiges und vollständiges Modul ist, wobei die Elektrolytsysteme der Stromversorgungselemente (22) nicht von einem Stromversorgungselement (22) zu einem anderen zirkulieren und mit Ausnahme der Ladungsübertragung keine chemische Reaktion zwischen benachbarten Stromversorgungselementen (22) auftritt, wobei jedes Stromversorgungselement (22) eine erste elektrische Sammelschicht (222) und eine zweite elektrische Sammelschicht (223) umfasst, wobei die erste elektrische Sammelschicht (222) oder die zweite elektrische Sammelschicht (223) von jedem der Stromversorgungselemente (22) in der Stromversorgungselementgruppe (20) direkt die zweite elektrische Sammelschicht (223) oder die erste elektrische Sammelschicht (222) eines benachbarten Stromversorgungselements (22) kontaktiert, um eine elektrische Verbindung zu bilden.

2. Horizontale Stromversorgungsverbundelementgruppe (10) nach Anspruch 1, bei welcher das Stromversorgungselement (22) umfasst:
eine Paketschicht (224), die zwischen der ersten elektrischen Sammelschicht (222) und der zweiten elektrischen Sammelschicht (223) angeordnet ist, um einen abgedichteten Raum zu bilden,
eine erste aktive Materialschicht (225), die in dem abgedichteten Raum angeordnet und elektrisch mit der ersten elektrischen Sammelschicht (222) verbunden ist,
eine zweite aktive Materialschicht (227), die in dem abgedichteten Raum angeordnet und elektrisch mit der zweiten elektrischen Sammelschicht (223) verbunden ist,
eine Isolationsschicht (226), die in dem abgedichteten Raum angeordnet und zwischen der ersten aktiven Materialschicht (225) und der zweiten aktiven Materialschicht (227) eingebettet ist, und
das Elektrolytsystem, das in der ersten aktiven Materialschicht (225) und der zweiten aktiven Materialschicht (227) angeordnet ist.

3. Horizontale Stromversorgungsverbundelementgruppe (10) nach Anspruch 2, bei welcher die ersten elektrischen Sammelschichten (222) oder die zweiten elektrischen Sammelschichten (223) der beiden Stromversorgungselemente (22) an den äußersten Seiten der Stromversorgungselementgruppe (20) die erste strukturierte Leitschicht (16, 16a, 16b, 16c) oder die zweite strukturierte Leitschicht (18, 18a, 18b) direkt kontaktieren, um elektrische Verbindungen zu bilden.

4. Horizontale Stromversorgungsverbundelementgruppe (10) nach Anspruch 1, bei welcher die erste leitfähige Leitung (24) und die zweite leitfähige Leitung (26) einstückig mit der ersten strukturierten Leitschicht (16, 16a, 16b, 16c) oder der zweiten strukturierten Leitschicht (18, 18a, 18b) elektrisch verbunden sind oder eine mit der ersten strukturierten Leitschicht (16, 16a, 16b, 16c) und die andere mit der zweiten strukturierten Leitschicht (18, 18a, 18b) elektrisch verbunden sind.

5. Horizontale Stromversorgungsverbundelementgruppe (10) nach Anspruch 1, bei welcher, wenn eine Vielzahl der horizontalen Stromversorgungsverbundelementgruppen (10) gebildet wird, die Vielzahl der horizontalen Stromversorgungsverbundelementgruppen (10) extern seriell und / oder parallel unter Verwendung der ersten leitfähigen Leitung (24) und der zweiten leitfähigen Leitung (26) verbunden sind.

6. Horizontale Stromversorgungsverbundelementgruppe (10) nach Anspruch 1, die ferner eine Vielzahl von Wärmeableitungskanälen umfasst, die zwischen benachbarten Stromversorgungselementgruppen (20) angeordnet sind.

7. Horizontale Stromversorgungsverbundelementgruppe (10) nach Anspruch 1, bei welcher eine Vielzahl von Positionierungselementen (32) auf den Oberflächen der ersten Isolationsschicht (12) und / oder der zweiten Isolationsschicht (14), die der Stromversorgungselementgruppe (20) zugewandt sind, ausgebildet sind und die Vielzahl von Positionierungselementen (32) außerhalb der ersten strukturierten Leitschicht (16, 16a, 16b, 16c) oder der zweiten strukturierten Leitschicht (18, 18a, 18b) freiliegen, um die Lage der Stromversorgungselementgruppe (20) zu begrenzen.

8. Horizontale Stromversorgungsverbundelementgruppe (10) nach Anspruch 1, bei welcher das Elektrolytsystem aus der Gruppe ausgewählt ist, die aus dem Gelzustand, dem flüssigen Zustand, dem pseudo-festen Zustand, dem festen Zustand oder Kombinationen davon besteht.

9. Horizontale Stromversorgungsverbundelementgruppe (10) nach Anspruch 1, bei welcher die Vielzahl von Stromversorgungselementen (22) über die erste elektrische Sammelschicht (222) und die zweite elektrische Sammelschicht (223) in Reihe geschaltet sind, wobei unterschiedliche Polaritäten miteinander in Kontakt stehen.

10. Horizontale Stromversorgungsverbundelementgruppe (10) nach Anspruch 2, bei welcher die Paketschicht (224) des Stromversorgungselements (22) eine Silikonschicht (224c) und zwei modifizierte Silikonschichten (224a, 224b) auf beiden Seiten der Silikonschicht umfasst.

11. Horizontale Stromversorgungsverbundelementgruppe (10) nach Anspruch 6, bei welcher ein Fluid in die Wärmeableitungskanäle eingebracht ist.

12. Horizontale Stromversorgungsverbundelementgruppe (10) nach Anspruch 11, bei welcher das Fluid ein Gas oder eine Flüssigkeit ist.

13. Horizontale Stromversorgungsverbundelementgruppe (10) nach Anspruch 1, bei welcher die erste leitfähige Leitung (24) und die zweite leitfähige Leitung (26) mit der ersten strukturierten Leitschicht (16, 16a, 16b, 16c) oder der zweiten strukturierten Leitschicht (18, 18a, 18b) in physikalischer oder chemischer Verbindung sind oder eine mit der ersten strukturierten Leitschicht (16, 16a, 16b, 16c) und die andere mit der zweiten strukturierten Leitschicht (18, 18a, 18b) in physikalischer oder chemischer Verbindung sind.

14. Horizontale Stromversorgungsverbundelementgruppe (10) nach Anspruch 1, bei welcher die erste leitfähige Leitung (24) und die zweite leitfähige Leitung (26) mit der ersten strukturierten Leitschicht (16, 16a, 16b, 16c) oder der zweiten strukturierten Leitschicht (18, 18a, 18b) durch Löten, Schmelzen, leitfähigen Klebstoff oder leitfähiges Gewebe verbunden sind oder eine mit der ersten strukturierten Leitschicht (16, 16a, 16b, 16c) und die andere mit der zweiten strukturierten Leitschicht (18, 18a, 18b) durch Löten, Schmelzen, leitfähigen Klebstoff oder leitfähiges Gewebe verbunden sind.

15. Horizontale Stromversorgungsverbundelementgruppe (10) nach Anspruch 3, bei welcher die ersten elektrischen Sammelschichten (222) oder die zweiten elektrischen Sammelschichten (223) der beiden Stromversorgungselemente (22) an den äußersten Seiten der Stromversorgungselementgruppe (20) mit der ersten strukturierten Leitschicht (16, 16a, 16b, 16c) oder der zweiten strukturierten Leitschicht (18, 18a, 18b) durch Löten, Schmelzen, leitenden Klebstoff oder leitfähiges Gewebe verbunden sind.

16. Horizontale Stromversorgungsverbundelementgruppe (10) nach Anspruch 2, bei welcher, wenn die Stromversorgungselementgruppe (20) durch eine Mehrzahl von Stromversorgungselementen (22) gebildet ist, die Mehrzahl von Stromversorgungselementen (22) in jeder Stromversorgungselementgruppe (20) elektrisch parallel und / oder seriell verbunden sind.

## Revendications

1. Groupe d'éléments d'alimentation en électricité composites horizontaux (10), comprenant:
une première couche d'isolation (12);
une seconde couche d'isolation (14), disposée à l'opposé le long de la direction horizontale de ladite première couche d'isolation (12);
**caractérisé par**:
une première couche conductrice à motif (16, 16a, 16b, 16c), disposée sur une première surface de ladite première couche d'isolation (12);
une seconde couche conductrice à motif (18, 18a, 18b), disposée sur une seconde surface de ladite seconde couche d'isolation (14), et à l'opposé le long de la direction horizontale à ladite première couche conductrice à motif (16, 16a, 16b, 16c), un premier conducteur (24) et un second conducteur (26) sont connectés électriquement à ladite première couche conductrice à motif (16, 16a, 16b, 16c) ou à ladite seconde couche conductrice à motif (18, 18a, 18b), ou à ladite première couche conductrice à motif (16, 16a, 16b, 16c) et à ladite seconde couche conductrice à motif (18, 18a, 18b), respectivement; et
une pluralité de groupes d'éléments d'alimentation en électricité (20), agencés côte à côte et enserrés entre ladite première couche d'isolation (12) et ladite seconde couche d'isolation (14), connectés électriquement via ladite première couche conductrice à motif (16, 16a, 16b, 16c) et ladite seconde couche conductrice à motif (18, 18a, 18b) dans la direction horizontale, et formant des connexions en série et/ou en parallèle à l'intérieur;
dans lequel chaque groupe d'éléments d'alimentation en électricité (20) est formé par deux éléments d'alimentation en électricité empilés verticalement (22) ou plus ; chacun desdits éléments d'alimentation en électricité (22) est un module indépendant et complet ; les systèmes d'électrolyte desdits éléments d'alimentation en électricité (22) ne circulent pas d'un élément d'alimentation en électricité (22) à un autre et aucune réaction chimique ne se produit entre des éléments d'alimentation en électricité adjacents (22) à l'exception d'un transfert de charge, chaque élément d'alimentation en électricité (22) comprend une première couche de collecte d'électricité (222) et une seconde couche de collecte d'électricité (223), ladite première couche de collecte d'électricité (222) ou ladite seconde couche de collecte d'électricité (223) de chacun desdits éléments d'alimentation en électricité (22) dans ledit groupe d'éléments d'alimentation en électricité (20) étant en contact directement avec ladite seconde couche de collecte d'électricité (223) ou ladite première couche de collecte d'électricité (222) d'un élément d'alimentation en électricité adjacent (22) pour former une connexion électrique.

2. Groupe d'éléments d'alimentation en électricité composites horizontaux (10) selon la revendication 1, dans lequel ledit élément d'alimentation en électricité (22) comprend:
une couche de conditionnement (224), disposée entre ladite première couche de collecte d'électricité (222) et ladite seconde couche de collecte d'électricité (223) pour former un espace scellé;
une première couche de matériau actif (225), disposée dans ledit espace scellé et connectée électriquement à ladite première couche de collecte d'électricité (222);
une seconde couche de matériau actif (227), disposée dans ledit espace scellé et connectée électriquement à ladite seconde couche de collecte d'électricité (223);
une couche d'isolation (226), disposée dans ledit espace scellé, et enserrée entre ladite première couche de matériau actif (225) et ladite seconde couche de matériau actif (227); et
ledit système d'électrolyte, disposé dans ladite première couche de matériau actif (225) et ladite seconde couche de matériau actif (227).

3. Groupe d'éléments d'alimentation en électricité composites horizontaux (10) selon la revendication 2, dans lequel lesdites premières couches de collecte d'électricité (222) ou lesdites secondes couches de collecte d'électricité (223) desdits deux éléments d'alimentation en électricité (22) sur les côtés les plus extérieurs dudit groupe d'éléments d'alimentation en électricité (20) sont en contact direct avec ladite première couche conductrice à motif (16, 16a, 16b, 16c) ou ladite seconde couche conductrice à motif (18, 18a, 18b) pour former des connexions électriques.

4. Groupe d'éléments d'alimentation électrique composites horizontaux (10) selon la revendication 1, dans lequel ledit premier conducteur (24) et ledit second conducteur (26) sont formés d'un seul tenant avec ladite première couche conductrice à motif (16, 16a, 16b, 16c) ou ladite seconde couche conductrice à motif (18, 18a, 18b) connectée électriquement avec eux, ou avec ladite première couche conductrice à motif (16, 16a, 16b, 16c) et ladite seconde couche conductrice à motif (18, 18a, 18b) connectées électriquement avec eux, respectivement.

5. Groupe d'éléments d'alimentation en électricité composites horizontaux (10) selon la revendication 1, dans lequel lorsqu'une pluralité desdits groupes d'éléments d'alimentation en électricité composites horizontaux (10) sont formés, ladite pluralité de groupes d'éléments d'alimentation en électricité composites horizontaux (10) sont connectés extérieurement en série et/ou en parallèle en utilisant ledit premier conducteur (24) et ledit second conducteur (26).

6. Groupe d'éléments d'alimentation en électricité composites horizontaux (10) selon la revendication 1, comprenant en outre une pluralité de canaux de dissipation de chaleur disposés entre des groupes d'éléments d'alimentation en électricité adjacents (20).

7. Groupe d'éléments d'alimentation en électricité composites horizontaux (10) selon la revendication 1, dans lequel une pluralité d'éléments de positionnement (32) sont formés sur les surfaces de ladite première couche d'isolation (12) et/ou de ladite seconde couche d'isolation (14) faisant face audit groupe d'éléments d'alimentation en électricité (20), et ladite pluralité d'éléments de positionnement (32) sont exposés à l'extérieur de ladite première couche conductrice à motif (16, 16a, 16b, 16c) ou de ladite seconde couche conductrice à motif (18, 18a, 18b) pour limiter l'emplacement dudit groupe d'éléments d'alimentation en électricité (20).

8. Groupe d'éléments d'alimentation en électricité composites horizontaux (10) selon la revendication 1, dans lequel ledit système d'électrolyte est choisi dans le groupe consistant en un état de gel, un état liquide, un état pseudo-solide, un état solide ou des combinaisons de ceux-ci.

9. Groupe d'éléments d'alimentation électrique composites horizontaux (10) selon la revendication 1, dans lequel ladite pluralité d'éléments d'alimentation électrique (22) sont formés par connexion en série via ladite première couche de collecte d'électricité (222) et ladite seconde couche de collecte d'électricité (223) avec des polarités différentes venant en contact mutuellement.

10. Groupe d'éléments d'alimentation en électricité composites horizontaux (10) selon la revendication 2, dans lequel ladite couche de conditionnement (224) dudit élément d'alimentation en électricité (22) inclut une couche de silicone (224c) et deux couches de silicone modifiées (224a, 224b) sur les deux côtés de ladite couche de silicone.

11. Groupe d'éléments d'alimentation en électricité composites horizontaux (10) selon la revendication 6, dans lequel un fluide est ajouté dans lesdits canaux de dissipation de chaleur.

12. Groupe d'éléments d'alimentation en électricité composites horizontaux (10) selon la revendication 12, dans lequel ledit fluide est un gaz ou un liquide.

13. Groupe d'éléments d'alimentation en électricité composites horizontaux (10) selon la revendication 1, dans lequel ledit premier conducteur (24) et ledit second conducteur (26) sont connectés à ladite première couche conductrice à motif (16, 16a, 16b, 16c) ou à ladite seconde couche conductrice à motif (18, 18a, 18b) par connexion physique ou chimique, ou à ladite première couche conductrice à motif (16, 16a, 16b, 16c) et à ladite seconde couche conductrice à motif (18, 18a, 18b), respectivement, par ladite connexion physique ou chimique.

14. Groupe d'éléments d'alimentation en électricité composites horizontaux (10) selon la revendication 1, dans lequel ledit premier conducteur (24) et ledit second conducteur (26) sont connectés à ladite première couche conductrice à motif (16, 16a, 16b, 16c) ou à ladite seconde couche conductrice à motif (18, 18a, 18b) par brasage, fusion, colle conductrice ou tissu conducteur, ou à ladite première couche conductrice à motif (16, 16a, 16b, 16c) et à ladite seconde couche conductrice à motif (18, 18a, 18b), respectivement, par brasage, fusion, colle conductrice ou tissu conducteur.

15. Groupe d'éléments d'alimentation en électricité composites horizontaux (10) selon la revendication 3, dans lequel lesdites premières couches de collecte d'électricité (222) ou lesdites secondes couches de collecte d'électricité (223) desdits deux éléments d'alimentation en électricité (22) sur les côtés les plus extérieurs dudit groupe d'éléments d'alimentation en électricité (20) sont connectées à ladite première couche conductrice à motif (16, 16a, 16b, 16c) ou à ladite seconde couche conductrice à motif (18, 18a, 18b) par soudure, fusion, colle conductrice ou tissu conducteur.

16. Groupe d'éléments d'alimentation en électricité composites horizontaux (10) selon la revendication 2, dans lequel lorsque ledit groupe d'éléments d'alimentation en électricité (20) est formé par une pluralité d'éléments d'alimentation en électricité (22), ladite pluralité d'éléments d'alimentation en électricité (22) dans un quelconque dit groupe d'éléments d'alimentation en électricité (20) sont connectés électriquement en parallèle et/ou en série.
